# FASCICULE DE BREVET EUROPEEN

(11) **EP 0 751 914 B1**
(45) Date de publication et mention de la délivrance du brevet: **27.05.1998**
(21) Numéro de dépôt: 95913207.7
(22) Date de dépôt: 16.03.1995
(51) Int. Cl.: C02F 11/08

(54) **PROCEDE ET INSTALLATION DE TRAITEMENT D'EFFLUENTS CHARGES EN MATIERE ORGANIQUE, NOTAMMENT PAR OXYDATION EN MILIEU HUMIDE, AVEC RECYCLAGE INTERNE DES RESIDUS SOLIDES, ET STATION D'EPURATION CORRESPONDANTE**
VERFAHREN UND VORRICHTUNG ZUR BEHANDLUNG VON ABWÄSSERN, DIE ORGANISCHE STOFFE ENTHALTEN, INSBESONDERE DURCH NASSOXYDATION MIT INTERNER FESTSTOFFRÜCKFÜHRUNG UND KLÄRANLAGE ZUR DURCHFÜHRUNG DES VERFAHRENS.
METHOD AND FACILITY FOR TREATING EFFLUENTS LOADED WITH ORGANIC MATERIAL, PARTICULARLY BY WET OXIDATION AND WITH INTERNAL SOLID RESIDUE RECYCLING, AND PURIFICATION FACILITY THEREFOR

(30) Priorité: 21.03.1994 FR 9403503
(43) Date de publication de la demande: 08.01.1997
(73) Titulaire: OTV Omnium de Traitements et de Valorisation, 94417 St Maurice Cédex (FR)
(72) Inventeur: DJAFER, Malik, F-92100 Boulogne-Billancourt (FR); LUCK, Francis, F-93160 Noisy-le-Grand (FR); SIBONY, Jacques, F-75018 Paris (FR)
(74) Mandataire: Vidon, Patrice
(86) Numéro de dépôt international: FR9500321
(87) Numéro de publication internationale: WO9525698

(56) Documents cités:
- EP-A- 0 224 905
- WO-A-93/02969
- CH-A- 523 205
- DE-A- 2 246 652
- US-A- 3 060 118
- US-A- 3 912 626

## Description

Le domaine de l'invention est celui du traitement des effluents industriels ou urbains chargés de particules solides, notamment mais non exclusivement des boues issues de stations d'épurations.

Plus généralement, l'invention s'applique au traitement des effluents qui contiennent une proportion importante de matière organique et/ou en suspension.

Le traitement dont il s'agit consiste à débarrasser les effluents à traiter d'une partie substantielle des composés indésirables qu'ils contiennent en vue de leur rejet dans un milieu naturel récepteur, une station d'épuration ou un réseau. L'effluent considéré peut être essentiellement de l'eau, mais aussi tout autre fluide industriel auquel l'invention peut être appliquée.

Typiquement, ce traitement est mis en oeuvre dans une station d'épuration, et vise à traiter les boues issues du processus d'épuration des eaux résiduaires entrant dans la station d'épuration. Le traitement permet de transformer les boues en une suspension dont la demande chimique en oxygène (DCO) est notablement réduite. La phase solide de ladite suspension, qui est fortement minéralisée, peut être évacuée, et la phase aqueuse de la suspension pourra le cas échéant être renvoyée en tête de station d'épuration.

Les méthodes d'épuration utilisées pour traiter les effluents urbains ou industriels font classiquement intervenir des procédés biologiques visant à abattre leur demande biologique en oxygène (DBO) et qui reproduisent les phénomènes naturels en les accélérant. Toutefois, certains effluents présentent des polluants difficilement biodégradables requérant l'utilisation de procédés spéciaux, et/ou nécessitant fréquemment de faire intervenir des substrats chimiques.

Un des traitements performants adaptés à ce type d'application est l'Oxydation en Milieu Humide (ou encore Oxydation par Voie Humide) , en anglais WAO (Wet Air Oxydation).

L'oxydation en milieu humide est une technique qui a été abondamment décrite dans l'art antérieur et notamment dans les brevets américain US - 4.721.575 et US - 4.272.383 ainsi que par exemple dans le brevet français FR 2 334 635. Cette technique vise à réaliser une oxydation poussée de la matière organique contenue dans des solutions présentant une forte concentration en matière organique peu ou non biodégradable. Elle a principalement été mise en oeuvre dans le cadre du traitement des effluents industriels et consiste à mettre en contact un gaz oxydant avec ladite solution à une température élevée tout en maintenant la solution à l'état liquide. Dans ce but, les conditions de mise en oeuvre d'un tel procédé sont classiquement comprises, pour la pression, entre environ 5 et environ 160 bars, et pour la température entre environ 100°C et environ 350°C. Le gaz oxydant utilisé peut être notamment de l'air, de l'air enrichi en oxygène ou encore de l'oxygène moléculaire.

D'autres traitements existent, notamment des méthodes d'épuration par boues activées et des méthodes physico-chimiques de précipitation. Ces traitements aboutissent généralement à la production de boues résiduelles, constituées essentiellement de composants minéraux non solubles et de matières organiques non décomposées.

En France, la quantité de boues produite par les stations d'épuration est d'environ un million de tonnes de matières sèches par an. Environ la moitié de ces boues est valorisée dans le domaine agricole tandis que 35 % sont stockés dans les décharges.

Consécutivement à la mise en place de nouvelles normes auxquelles doivent répondre les eaux épurées, la production des boues d'épuration est de plus en plus importante. Parallèlement, les dispositions réglementaires organisant le stockage, la valorisation agricole ou la dégradation de celles-ci sont de plus en plus restrictives, compte-tenu du fait que de telles boues sont susceptibles de présenter des inconvénients pour l'environnement et la santé en raison de leur nature.

L'amélioration des traitements, en vue de résoudre le problème des boues constitue un défi technologique auquel la présente invention apporte une famille de solutions. Le traitement peut aussi dans certains cas permettre de respecter directement les normes de rejet ou de réutilisation.

Classiquement, on a essentiellement tenté de traiter séparément les boues, indépendamment du processus de traitement des effluents. Ce traitement peut consister notamment en une aération prolongée, une digestion anaérobie, une incinération, une stabilisation aérobie ou encore un compostage.

Le but de ces traitements est notamment de diminuer le taux de matière sèche qu'elles renferment en oxydant la matière organique. Toutefois, les filières classiques de traitement des boues, qui intègrent généralement une étape de déshydratation mécanique ont, dans la majorité des cas, une influence négative sur le bon fonctionnement de la station. Les raisons principales de cette mauvaise influence sont liées au retour en tête de station des eaux issues du traitement des boues, qui créent une surcharge en DCO ainsi qu'en ammoniaque à éliminer par la station, cette surcharge pouvant représenter 15 à 30 % de la charge initiale.

Pour tenter de résoudre ces problèmes, une solution consiste à renforcer les conditions opératoires du traitement des effluents mis en oeuvre, de façon notamment à accentuer la minéralisation des boues résiduelles. Ainsi, dans le cas des traitements par oxydation en milieu humide, on va tenter de renforcer la minéralisation en prolongeant les temps de traitements, ou en augmentant la pression, la température ou la concentration en gaz oxydants.

Mais cette stratégie tend à rendre le procédé très onéreux.

L'invention a pour objectif de fournir un procédé permettant de pallier ces inconvénients de l'état de la technique.

Plus précisément, un premier objectif de l'invention est de fournir un procédé de traitement d'effluents industriels et/ou urbains contenant une proportion importante de matière organique soluble et/ou en suspension, qui permette d'optimiser la minéralisation des matières en suspension.

Un objectif complémentaire de l'invention est de fournir un tel procédé qui constitue un perfectionnement au procédé classique d'oxydation en milieu humide, c'est à dire essentiellement selon lequel on traite les effluents dans un réacteur au sein duquel on fait subir auxdits effluents une oxydation en présence d'au moins un gaz oxydant de façon à minéraliser une partie importante de la matière organique contenue dans lesdits effluents, en produisant d'une part une phase gazeuse contenant essentiellement de l'oxygène, du dioxyde de carbone, du monoxyde de carbone, de la vapeur d'eau et des composés organiques volatils, et d'autre part une phase essentiellement liquide contenant principalement de la matière organique résiduelle soluble ainsi qu'une phase solide essentiellement minérale en suspension.

Un autre objectif de l'invention est de fournir un tel procédé constituant un nouveau principe général de traitement offrant diverses variantes, et un jeu de variables ajustables en fonction des effluents et des conditions de mise en oeuvre du procédé.

En particulier, l'invention permet d'améliorer l'efficacité et le coût engendrés par l'utilisation de catalyseurs de la réaction d'Oxydation en Milieu Humide. Le catalyseur peut classiquement être introduit sous deux catégories : sous forme de solide insoluble (catalyse hétérogène), ou sous forme soluble (catalyse homogène).

La catalyse homogène est généralement appréciée en raison de sa simplicité de mise en oeuvre. Cependant, cette méthode a pour contrepartie l'inconvénient d'engendrer des coûts de fonctionnement élevés. En effet, on doit choisir habituellement entre soit la perte du catalyseur après une seule utilisation, soit la mise en oeuvre de procédés physico-chimiques spécifiques et coûteux pour séparer le catalyseur hors du milieu réactionnel pour le recycler.

La catalyse hétérogène sous forme solide est quant à elle difficile à développer en Oxydation en Milieu Humide, particulièrement dans le cadre du traitement des boues. En effet, si cette solution permet théoriquement de conserver la même quantité de catalyseur pour traiter des volumes importants d'effluent, la mise en pratique est aujourd'hui encore mal maîtrisée. Les raisons sont essentiellement dues aux conditions opératoires ainsi qu'aux caractéristiques des boues usées urbaines qui engendrent rapidement des pertes d'activité catalytique par dissolution du catalyseur et formation de dépôt.

Dans ce cadre, l'invention se donne pour objectif de fournir un procédé palliant ces inconvénients constatés dans l'état de la technique, en rassemblant tout à la fois les avantages des différents procédés catalytiques, homogène et hétérogène.

Un objectif complémentaire de l'invention est de fournir un tel procédé susceptible d'être mis en oeuvre en réacteur continu, semi-continu, ou en discontinu, et dans différentes caractéristiques d'écoulement (flux-piston, réacteur parfaitement agité,..), etc...

L'invention a également pour objectif de fournir un principe d'installation permettant de mettre en oeuvre un tel procédé.

Ces objectifs, ainsi que d'autres qui apparaîtront par la suite, sont atteints selon l'invention à l'aide d'un procédé d'oxydation en milieu humide applicable à des effluents formant une masse solide et une masse liquide subissant continûment une oxydation en présence d'au moins un gaz oxydant de façon à minéraliser une partie importante de la matière organique contenue dans lesdits effluents, procédé caractérisé en ce qu'on effectue un traitement différencié des composants de l'effluent consistant à dissocier les temps de séjour de la masse liquide et de la masse solide dans le réacteur.

Ce principe général est avantageusement mis en oeuvre, selon l'invention, dans un procédé intégré incluant l'utilisation d'un réacteur d'oxydation en milieu humide des effluents en produisant d'une part une phase gazeuse, et d'autre part une phase essentiellement liquide contenant principalement de la matière organique résiduelle soluble ainsi qu'une phase solide essentiellement minérale en suspension,
procédé caractérisé en ce qu'on effectue une étape de séparation liquide/solide de ladite phase essentiellement liquide résultant dudit procédé d'oxydation en milieu humide pour isoler ladite phase solide, et en ce qu'on recycle au sein dudit réacteur d'oxydation en milieu humide, au moins une fraction de ladite phase solide séparée.

On notera qu'il était connu de US-A- 3 912 626 un procédé d'oxydation en milieu humide comportant une étape de séparation liquide/solide mais ne préconisant ni ne suggérant un recyclage de la phase solide provenant de cette séparation.

Comme détaillé plus loin à l'occasion de la description de divers modes de réalisation de l'invention, l'opération de recyclage ne signifie pas que ladite fraction de phase solide recyclée doive obligatoirement sortir du réacteur avant d'y être réintroduite. Le recyclage de la phase solide signifie seulement qu'au moins une fraction de ladite phase solide séparée est réutilisée au sein du réacteur au cours d'au moins un nouveau cycle d'oxydation en milieu humide (en continu, ou en discontinu).

Ainsi, suivant un premier mode de réalisation, la décantation s'effectue dans le réacteur lui-même, et au moins une fraction de la phase solide séparée est "recyclée" (c.-à.-d. subit au moins un nouveau cycle) en étant maintenue dans le réacteur, la fraction solide complémentaire non recyclée ainsi que le surnageant liquide issu de la décantation étant pour leur part évacués. Ces opérations sont par exemple réalisées dans des réacteurs fonctionnant en semi-continu (auquel cas c'est lors de périodes d'interruption de la réaction d'oxydation en milieu humide qu'on évacuera au moins une partie de la phase liquide séparée hors du réacteur, et qu'on conservera au moins une fraction de la phase solide séparée dans le réacteur), ou même dans des réacteurs fonctionnant en continu. Dans ce dernier cas, et dans l'hypothèse où on réalise une recirculation de l'effluent dans le réacteur au cours de ladite réaction d'oxydation en milieu humide, c'est lors de périodes d'interruption de ladite recirculation de l'effluent dans le réacteur qu'on évacuera au moins une partie de la phase liquide séparée hors du réacteur, et qu'on conservera au moins une fraction de la phase solide séparée dans le réacteur.

Mais dans un autre mode de réalisation où la décantation sera effectuée hors du réacteur, il y aura alors bien "recirculation" de la phase solide, avec extraction de la phase solide hors du réacteur, puis réintroduction dans le réacteur d'au moins une fraction de ladite phase solide séparée.

On notera que le présent procédé revient à optimiser le processus d'oxydation en milieu humide en dissociant, de façon nouvelle et originale, les deux objectifs poursuivis dans le cadre de la présente invention, et plus précisément les moyens pour les atteindre, à savoir:
- d'une part l'abattement de la demande chimique en oxygène (DCO) de l'effluent à traiter;
- d'autre part la minéralisation du résidu solide issu du procédé.

La phase liquide, constituée essentiellement de matière organique résiduelle soluble peut par exemple être envoyée vers une station d'épuration classique, ou une filière de traitement biologique. On peut se satisfaire pour cette phase liquide d'un abattement modeste de la DCO. En effet, la matière organique qui subsiste, sous forme soluble, dans la phase aqueuse de la suspension obtenue à l'issue de l'étape d'oxydation en milieu humide peut servir avantageusement de substrat pour la biomasse utilisée dans le traitement biologique, substrat qui sera notamment facilement biodégradable par les bactéries hétérotrophes des boues activées utilisées pour la transformation de l'azote sous forme nitrate en azote moléculaire. Cet apport de substrat permet de renforcer l'efficacité de ces bactéries et ainsi d'accroître le rendement d'élimination de la pollution azotée contenue dans ledit effluent. Dans les filières classiques, les niveaux d'élimination de l'azote sous forme nitrate requis sont en effet difficiles à obtenir en raison d'un manque, dans les eaux usées, de carbone facilement assimilable par les bactéries dénitrifiantes hétérotrophes. Le procédé selon l'invention permet donc aussi de résoudre ce problème.

Dans ce but, les paramètres de fonctionnement (notamment, température, pression, temps de séjour, quantité de catalyseur, et tout autre moyen permettant de jouer sur les conditions d'oxydation) seront avantageusement ajustés par l'homme de métier pour que le rapport N/DCO de la phase liquide issue du réacteur d'Oxydation en Milieu Humide soit approprié. Plus précisément, on pourra veiller à ce que cette phase liquide contienne suffisamment de DCO non seulement pour satisfaire aux besoins de la station de traitement biologique vers laquelle elle est renvoyée, mais encore aussi pour traiter l'azote N supplémentaire contenu dans ladite phase liquide recyclée.

En revanche, les contraintes sont plus fortes pour la phase solide, pour laquelle on souhaite généralement une réduction importante de sa teneur en matière organique. La phase solide va donc quant à elle être recyclée au sein du réacteur, et subir ainsi une action d'oxydation répétée dont l'homme du métier pourra préprogrammer le nombre d'itérations afin d'obtenir le taux de minéralisation souhaité. Le recyclage de la phase solide, qui est constituée de divers minéraux insolubles associés à une fraction de composés organiques difficilement oxydables, permet donc de travailler sélectivement sur la partie la plus réfractaire de la boue. Ceci est d'autant plus efficace que la DCO de la boue s'avère effectivement oxydable avec des rendements d'oxydation qui peuvent être compris, notamment en présence de catalyseur, entre 80 et 90%.

En outre, il a été constaté que le recyclage du solide n'affecte pas l'efficacité de l'abattement de la DCO de la boue.

Avantageusement, la valeur de la fraction de phase solide recyclée est calculée de façon à obtenir un taux de recyclage du solide compris entre 1 et 20. On peut définir le taux de recyclage comme étant égal à l'inverse de la fraction de solide recyclée. (Un recyclage de 20% de la phase solide correspond à un taux de recyclage égal à 5).

Ce procédé peut en outre être encore perfectionné au moyen de deux variantes, qui peuvent être mises en oeuvre individuellement, ou en combinaison.

Selon la première variante, ladite oxydation en milieu humide peut être effectuée en présence de catalyseur, ledit catalyseur étant tel qu'après ladite séparation liquide/solide de la suspension essentiellement liquide résultant dudit procédé d'oxydation en milieu humide, ladite phase solide recyclée contient une proportion importante dudit catalyseur, typiquement au moins 60%.

On s'est en effet aperçu que, de façon surprenante, le catalyseur introduit dans le réacteur est récupéré dans la phase solide produite par la réaction. Du fait qu'au moins une fraction de cette phase solide est appelée, selon l'invention, à être recyclée au sein du réacteur, il y a donc ainsi réutilisation du catalyseur au cours de plusieurs cycles successifs, pendant lesquels il continue à jouer son rôle. On réalise ainsi un processus extrêmement économique tant du fait de la réutilisation du catalyseur, que du fait du coût marginal nul de sa récupération dans la phase solide, et de la synergie de ce processus avec le principe de recyclage du résidu solide à la base de l'invention.

Préférentiellement, ledit catalyseur est un métal appartenant au groupe comprenant le manganèse, le fer, le cobalt, le nickel, le cuivre, le zinc, et les mélanges et composés d'un ou plusieurs d'entre eux. De façon particulièrement avantageuse, il s'agit d'un composé soluble du cuivre (tel que le sulfate de cuivre) ou du zinc ou leur mélange.

Avantageusement, le rapport massique métal catalyseur / demande chimique en oxygène (DCO) de l'effluent avant traitement est compris entre 5. 10⁻⁴ et 3. 10⁻¹ environ.

Selon la seconde variante, on ajoute un additif chimique acidifiant à ladite fraction de phase solide séparée et recyclée au sein dudit réacteur d'oxydation en milieu humide. Avantageusement, ledit additif chimique est ajouté de façon à ajuster le pH de ladite fraction de phase solide recyclée à des valeurs comprises entre environ 1 et environ 5.

Ce traitement chimique acidifiant optionnel permet de mieux minéraliser le résidu, par une action d'hydrolyse de la matière organique. Cette variante, bien qu'elle puisse être mise en oeuvre seule, présente une bonne synergie avec la première variante (ajout d'un catalyseur dans le réacteur). L'additif chimique appartient préférentiellement au groupe comprenant l'acide sulfurique et les acides organiques. Mais selon une autre caractéristique de l'invention, l'acidification peut être réalisée par mise en contact de la phase solide avec des NOₓ (résultant de l'oxydation catalytique de la phase gazeuse chargée en azote ammoniacal produite par le procédé5 et /ou avec des nitrites produits à partir desdits NOₓ.

Pour les différentes variantes, ladite oxydation en milieu humide est effectuée préférentiellement à une température comprise entre environ 100°C et environ 350°C, sous une pression totale comprise entre environ 5 bars et environ 160 bars. La quantité d'oxygène introduite dans ledit réacteur d'oxydation en milieu humide correspond avantageusement à un rapport oxygène / demande chimique en oxygène (DCO) de l'effluent non traité compris entre 0,5 et 2,0 environ.

Préférentiellement, ladite unité d'oxydation en milieu humide est équipée d'un échangeur de chaleur permettant de chauffer les boues entrant dans ladite unité d'oxydation en milieu humide (en entrée initiale, et/ou en réentrée à travers une boucle de recirculation) à l'aide de la phase liquide en sortant.

Dans un mode de réalisation avantageux de l'invention le procédé comporte en outre:
- d'une part une étape de strippage de ladite phase essentiellement liquide issue de l'unité d'oxydation en milieu humide et contenant principalement de la matière organique résiduelle soluble et de l'ammoniaque, au moyen d'une veine gazeuse, afin de produire une seconde phase aqueuse significativement appauvrie en ammoniaque et une seconde phase de gaz contenant parmi ses constituants de l'oxygène et de l'ammoniac ; et ,
- d'autre part une étape d'oxydation de ladite seconde phase de gaz ainsi obtenue, de façon à obtenir une troisième phase de gaz résultant de l'oxydation essentiellement complète de l'ammoniaque en oxydes d'azote NO et NO₂, (ainsi que du monoxyde de carbone et des composés organiques volatiles en dioxyde de carbone),
et on utilise ladite troisième phase de gaz contenant essentiellement les oxydes d'azote NO et NO₂ ainsi obtenue, dans un processus appartenant à ladite chaîne de traitement desdits effluents à traiter.

Le cas échéant, ladite troisième phase de gaz contenant essentiellement les oxydes d'azote NO et NO₂ subit une étape préalable de transformation au moins partielle en nitrites avant utilisation dans un processus appartenant à ladite chaîne de traitement desdits effluents à traiter.

Avantageusement, ledit processus d'utilisation de ladite troisième phase de gaz contenant essentiellement les oxydes d'azote NO et NO₂ appartient au groupe comprenant leur utilisation pour :
- réinjection dans le processus d'oxydation en milieu humide pour accélérer les processus d'oxydation et limiter la production de NH4 durant l'oxydation des boues,
- désinfection d'une phase aqueuse à une étape quelconque de la chaîne de traitement de l'invention, ou encore d'eaux non traitées dans ladite chaîne de traitement ;
- acidification de la phase solide issue du processus d'oxydation en milieu humide,
- stabilisation des boues résiduelles issues du procédé (boues primaires issues de la station principale d'épuration ou boues secondaires issues de l'étape d'oxydation en milieu humide), voire de boues non issues de la présente chaîne de traitement.

L'invention concerne également une installation de traitement des boues mettant en oeuvre un procédé tel que décrit précédemment, ainsi qu'une station d'épuration d'eaux caractérisée en ce qu'elle comporte une unité principale de traitement d'eaux couplée à une telle installation de traitement des boues, ladite installation de traitement des boues recevant en entrée les boues produites par ladite unité principale, et renvoyant en tête de ladite unité principale la phase liquide résultant du traitement desdites boues.

On notera que DE-A-2 246 652 divulgait une installation approchante conçue pour des réactions en milieu liquide à des températures bien inférieures à 100°C et ne convenant donc absolument pas à la mise en oeuvre des procédés d'oxydation en milieu humide.

D'autres caractéristiques et avantages de l'invention apparaîtront à la lecture de la description suivante de modes de réalisation préférentiels de l'invention, donnés à titre illustratif et non limitatif, et des dessins annexés dans lesquels :
- la figure 1 est un schéma présentant un mode de réalisation d'une installation de mise en oeuvre du procédé selon l'invention dans un réacteur en continu ;
- la figure 2 est un schéma présentant un mode de réalisation d'une installation de mise en oeuvre du procédé selon l'invention dans un réacteur en senti-continu ;
- la figure 3 est un graphe illustrant les performances en taux d'abattement de la DCO obtenues en mettant en oeuvre la première variante (recyclage avec catalyseur), puis la seconde variante (recyclage avec catalyseur et acidification), dans le cadre du procédé de l'invention ;
- la figure 4 fournit un diagramme comparatif des taux de matière organique résiduelle constatés au cours d'essais successifs dans différentes conditions opératoires.

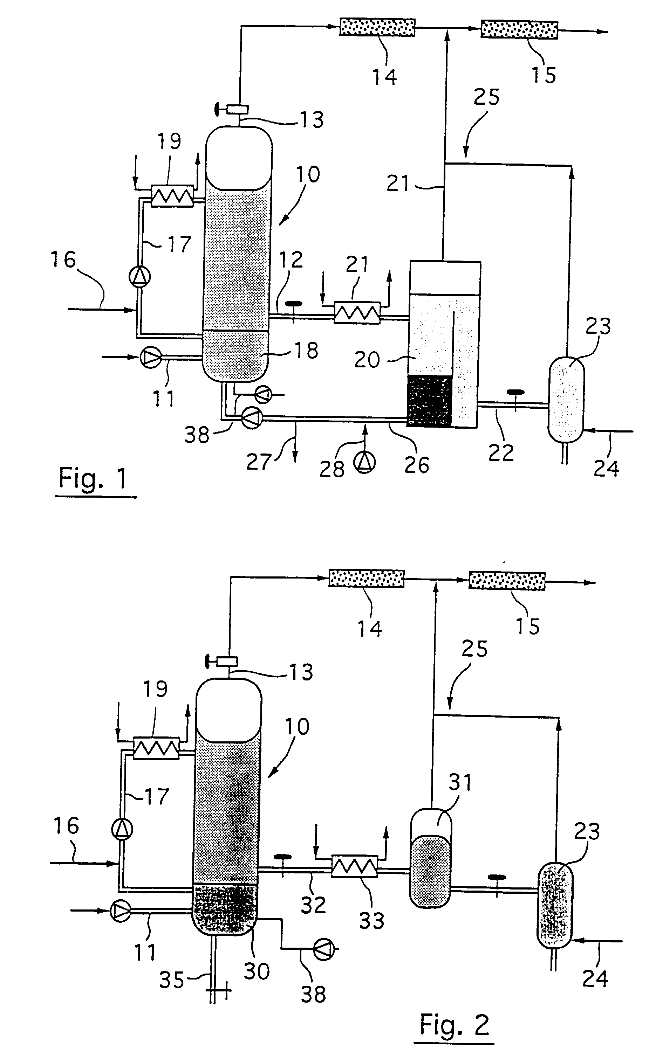

Comme représenté en figure 1, le procédé de l'invention peut être mis en oeuvre dans un réacteur 10 d'oxydation en milieu humide fonctionnant en continu.

Le réacteur 10 est alimenté en effluents à traiter par la canalisation d'injection 11. Ces effluents à traiter sont principalement des effluents industriels ou urbains chargés de particules solides, notamment mais non exclusivement des boues issues de stations d'épurations.

Ce réacteur 10 est pourvu de moyens de chauffage permettant d'amener à une température comprise entre environ 100°C et environ 350°C. Des moyens de pressurisation sont prévus pour amener les effluents à traiter présents dans le réacteur 10 sous une pression totale comprise entre environ 5 bars et environ 160 bars.

L'injection d'oxygène 16 s'effectue par exemple dans une boucle 17 de recirculation des boues depuis la base 18 du réacteur 10 vers sa partie supérieure. Cette disposition est avantageuse, mais non obligatoire. On peut envisager d'injecter l'oxygène en un autre endroit du réacteur. La quantité d'oxygène introduite dans ledit réacteur d'oxydation en milieu humide correspond avantageusement à un rapport stoechiométrique oxygène / demande chimique en oxygène (DCO) de l'effluent non traité compris entre 0,5 et 2,0 environ.

De façon classique, le réacteur est muni de deux canalisations de sortie 12, 13 :
- d'une part une canalisation 13 d'évacuation d'une phase gazeuse saturée en eau, contenant essentiellement de l'oxygène, du dioxyde de carbone, du monoxyde de carbone, et des composés organiques volatils. Ces gaz peuvent être soit brûlés de façon classique à haute température, soit traités par voie catalytique, notamment successivement par oxydation catalytique 14 à 200-500°C environ (oxydation du CO), puis par oxydation catalytique 15 à 300-900°C environ (oxydation de NH₃).
- d'autre part une canalisation 12 d'évacuation d'une phase essentiellement liquide contenant principalement de la matière organique résiduelle soluble ainsi qu'une phase solide essentiellement minérale en suspension.

Conformément à une caractéristique essentielle de l'invention, la canalisation 12 alimente un séparateur gaz/liquide/solide 20.

Avantageusement, un échangeur 21 est situé en amont du séparateur 20, de façon à récupérer les calories des effluents traités pour les restituer par exemple pour préchauffer les boues. Pour les mêmes raisons, on peut également prévoir un échangeur 19 dans la boucle de recirculation 17 du réacteur 10. On peut ainsi récupérer l'énergie dégagée par la réaction d'oxydation en milieu humide, qui est exothermique.

Le séparateur est par exemple un décantateur/dégazeur à chaud et sous pression, ce qui simplifie la recompression des produits de décantation destinés à être réintroduits dans le réacteur 10. Toutefois, l'homme du métier pourra concevoir d'autres types de séparateurs sans sortir du cadre de la présente invention.

Le séparateur 20 comporte trois sorties :
-i- une sortie 21 d'évacuation des gaz, contenant notamment de l'ammoniac, lesquels sont envoyés vers l'unité 15 d'oxydation catalytique à 300-900 °C.
-ii- une sortie 22 d'évacuation de la phase liquide séparée. Cette phase liquide séparée peut avantageusement être renvoyée vers une station d'épuration principale (dans le cas où l'installation décrite ici est couplée à une station d'épuration des eaux, dont elle traite les boues, et à laquelle elle renvoie la phase liquide produite par le traitement desdistes boues). On peut en outre réaliser un stripage de la phase liquide dans une colonne 23 alimentée en gaz de stripage 24, en particulier dans le but d'en éliminer l'ammoniaque. Le pH de cette phase liquide peut le cas échéant être ajusté par ajoût dans la colonne 23 d'un composé alcalin comme la chaux, la soude, etc.... Les gaz de stripage contenant l'ammoniac obtenus en sortie 25 de la colonne 23 sont avantageusement traités dans le réacteur 15 d'oxydation catalytique. Le stripage permet de soulager la charge en ammoniaque sur la station d'épuration principale En effet dans les installations classiques le poste de déshydratation des boues, qui est supprimé dans le cadre de l'invention, est généralement responsable du retour en tête de station d'une charge en ammoniaque qui peut représenter 20% de la charge totale ;
-iii- une sortie 26 de soutirage du résidu solide décanté, afin de le recirculer dans le réacteur conformément au processus caractéristique de l'invention. Dans ce mode de réalisation, le recyclage de l'invention consiste donc à renvoyer une fraction ou la totalité des matières sortant du réacteur à l'entrée de celui-ci.

Une fraction du résidu solide est continûment extraite par la purge solide 27. Dans le processus continu illustré en figure 1, le débit de boues purgé en 27 sera ajusté en fonction du débit d'effluents injecté en 11, de façon à permettre l'obtention du taux de recyclage souhaité, et *in fine* le taux de minéralisation désiré. Le taux de recyclage sera ici le rapport du débit massique de matières solides recyclées dans la canalisation 26, au débit massique de matières solides quittant le système par la canalisation 27. La valeur de la fraction de phase solide recyclée est calculée de façon à obtenir généralement un taux de recyclage du solide compris entre 0 et 20.

Le recyclage permet ainsi d'accroître le niveau de minéralisation de la phase solide tout en conservant les performances de l'Oxydation en Milieu Humide. En effet, pour un temps de séjour donné des effluents dans le réacteur 10 (par exemple de l'ordre de 1 heure), les résidus solides auront eux un temps moyen de séjour supérieur du fait du recyclage, et donc un traitement d'oxydation plus intense qui permet d'en augmenter la minéralisation, ainsi que, comme on l'a constaté, de diminuer leur teneur en matières volatiles.

Le stripage réalisé dans la colonne 23 peut être effectué à l'aide d'une veine d'air introduite en 24. Dans ce cas, les gaz 25 issus du stripage sont ensuite avantageusement combinés avec les gaz issus du réacteur d'oxydation catalytique 14 pour être traités dans le réacteur 15. Cette combinaison permet notamment de préchauffer la phase gazeuse avant son introduction en 15. Mais, dans une sous-variante (non représentée), les gaz de stripage 24 peuvent être direcetement constitués par la phase gazeuse sortant du réacteur 14. Dans ce cas, la sortie de 14 est connectée en 24, au lieu d'être connectée à 15.

Selon une première variante de l'invention, l'adjonction de catalyseur améliore l'efficacité du processus. Le catalyseur est introduit directement dans le réacteur 10.

Le catalyseur est avantageusement un métal de transition tel que le manganèse, le fer, le cobalt, le nickel, le cuivre, le zinc, et les mélanges et composés de ces métaux. Typiquement on utilisera les composés solubles du cuivre et du zinc et leur mélange. Comme déjà mentionné, le catalyseur peut classiquement être introduit sous deux catégories : sous forme de solide insoluble (catalyse hétérogène), ou sous forme soluble (catalyse homogène). Mais, selon l'invention, même lorsqu'on travaille avec un catalyseur homogène, le procédé permet de récupérer et recycler la presque totalité du catalyseur initialement introduit. En d'autres termes, en réintroduisant dans le réacteur 10 (et donc dans de nouvelles boues à traiter), le résidu minéral issu du traitement catalytique des boues, on observe des propriétés catalytiques qui permettent de limiter l'usage d'un catalyseur de manière continue.

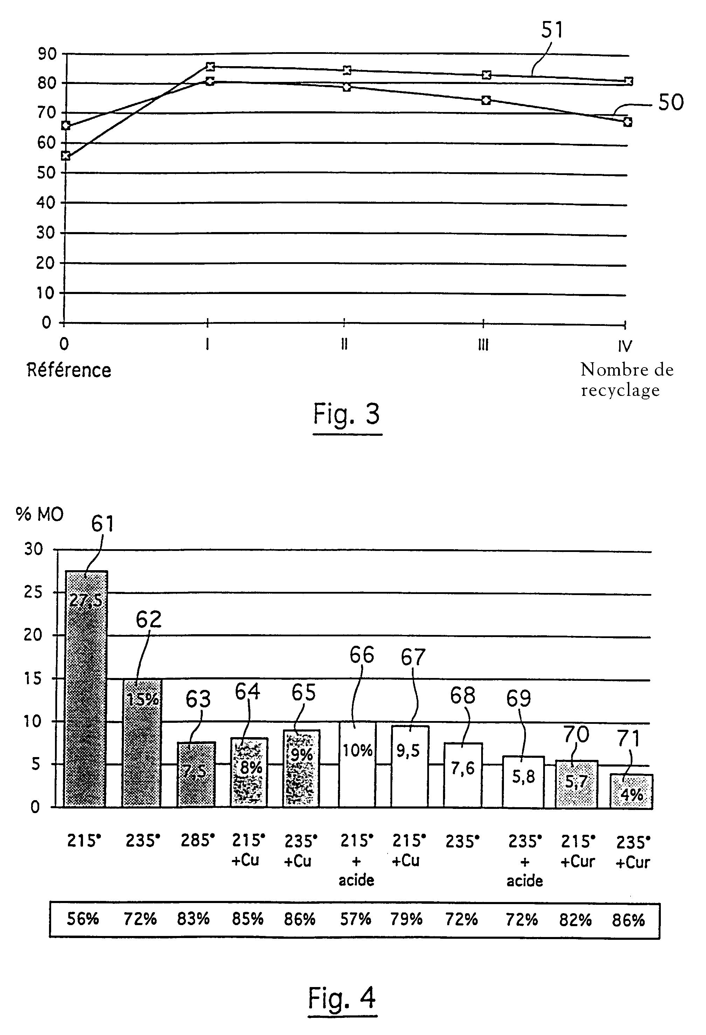

Ceci est illustré par la courbe 50 du graphe de la figure 3. Ce graphe représente le taux d'abattement de la DCO en fonction du temps, et plus précisément en fonction de recyclages successifs des boues réalisés au cours d'essais en discontinu. Les essais ont été effectués à 215°C, en présence de sulfate de cuivre. La "référence" (à l'extrême gauche) correspond à un traitement sans catalyseur. Les instants I, II, III, et IV correspondent respectivement au lot initial avec introduction de catalyseur, puis aux lots suivants dans lesquels on a réintroduit les boues issues du lot immédiatement précédent. Du fait que ces boues contiennent une part importante du catalyseur introduit initialement, le taux d'abattement de la DCO, même s'il décroît légèrement de lot en lot, reste remarquablement supérieur à l'abattement du lot de référence, jusqu'au moins la quatrième itération.

Grâce à l'invention, dans cette variante, il suffit donc de compenser simplement les pertes marginales de catalyseur pour maintenir l'efficacité nominale, ce qui représente un gain économique considérable pour la mise en oeuvre industrielle du processus.

Les résultats sont améliorés lorsqu'on procède à une acidification préalable de la phase recyclée (seconde variante combinée à la première). Cette acidification s'effectue avantageusement par injection en 28, soit d'une phase acide liquide pompée, soit encore d'une phase gazeuse compressée (par exemple des NOx, comme précisé ci-après). Cette phase acide, liquide ou solide, pourra être mélangée au solide recirculé par tout moyen approprié (poreux, mélangeur statique, etc...).

Selon un autre mode de réalisation, l'injection de la phase acide peut aussi être effectuée par exemple directement en 38, dans la base 18 du réacteur.

D'une manière générale, l'acidification permet d'atteindre un niveau de performances comparable à ce que l'on obtient habituellement avec des conditions opératoires -pression et températures - beaucoup plus sévères. Cette acidification a deux effets, qui sont en synergie avec les autres fonctionnalités du procédé :
- elle permet l'hydrolyse de la matière organique associée à la phase solide, qui est généralement très réfractaire puisqu'elle n'a pas été oxydée après une heure de traitement en Oxydation en Milieu Humide ;
- elle provoque la solubilisation du cuivre précipité (ou le cas échéant d'un autre métal ou composé métallique utilisé comme catalyseur, seul ou en combinaison avec le cuivre), que l'on peut réintroduire dans le réacteur 10 avec la phase solide en association avec la boue à traiter.

La courbe 51 de la figure 3 rend compte du pourcentage d'abattement de la matière organique dans les mêmes conditions que pour la courbe 50, à la différence toutefois que dans ces essais il a été procédé également à une acidification du résidu solide recyclé. On constat qu'en procédant à une acidification, l'effet catalytique est prolongé de façon substantielle, quand bien même on n'ajuste pas la quantité de catalyseur en fonction des pertes (par exemple de l'ordre de 20%).

D'autres résultats (non représentés), montrent que la teneur en matières volatiles du résidu solide subit aussi un effet significatif, et est réduite de 23 à 10% sans acidification, et jusqu'à 5,7 % avec une acidification.

Le diagramme de la figure 4 permet de comparer les taux de matière organique (M.O.) résiduelle (échelle des ordonnées), ainsi que le tauxd'abattement de la DCO (tableau figurant à la base du diagramme), pour différentes conditions de mise en oeuvre du procédé d'Oxydation en Milieu Humide.

Plus précisément :
- les trois premiers blocs 61, 62, 63 illustrent les taux d'abattement croissants obenus lorsqu'on travaille à température croissante (respectivement 215°C, 235°C, et 285 °C), sans recyclage, ni catalyseur, ni acidification.
- les deux blocs suivants 64, 65 correspondent à des procédés classiques, sans recyclage également, dans lesquels toutefois on a ajouté du cuivre comme catalyseur. On constate que, à température égale (215°C et 235°C respectivement), les performances obtenues sont notablement meilleure qu'en l'absence de cuivre ;
- par les trois blocs suivants 66, 67, 68, 69, on a montré les performances obtenues en mettant en oeuvre le recyclage du résidu solide selon l'invention, en classant différents essais par rang d'efficacité croissante, à savoir successivement : avec acidification seule (à 215°C), avec cuivre seul (à 215°C), sans addition de Cu ni acidification (à 235°C), et enfin avec acidification seule (à 235 °C) ;
- les deux derniers blocs 70, 71 correspondent aux variantes qui se sont montré les plus efficaces en terme de % M.O., à savoir les essais avec recyclage, catalyseur cuivre et acidification combinés, à 215°C et à 235°C.

La figure 2 schématise un mode de réalisation d'une installation de mise en oeuvre du procédé selon l'invention dans un réacteur en semi-continu.

Les mêmes références numériques que pour la figure 1 ont été employées pour désigner les mêmes éléments. Les différences sont à trouver en ce qui concerne la fonction de décantation. En effet, au lieu d'être réalisée à l'extérieur du réacteur 10 dans un séparateur spécifique (20 en figure 1), la séparation du résidu solide est ici réalisée au fond même 30 du réacteur 10. Une purge 35 permet de soutirer tout ou partie des matières solides décantées.

Le recyclage caractéristique de l'invention est donc réalisé en maintenant dans le réacteur 10 au moins une partie des matières solides résultant d'un traitement au sein du réacteur. Le taux de recyclage sera le rapport de la quantité de matières solides contenue dans le réacteur 10 sur la quantité de matières solides entrant dans le réacteur 10 par la canalisation 11 (ou encore sur la quantité de matières solides sortant du réacteur 10 par la canalisation 35).

L'avantage de cette solution, outre l'économie d'un décanteur extérieur (d'autant plus onéreux qu'on souhaitera généralement effectuer la séparation à chaud et sous pression pour faciliter la recompression des résidus solides recyclés dans le réacteur 10), est que la conservation d'une quantité de masse solide dans le réacteur permet de gagner une inertie thermique, utile pour le redémarrage de la réaction, et disponible à chaque itération dès le début de l'injection des effluents à traiter.

Du fait que la séparation de la phase solide est effectuée au sein du réacteur, il n'est plus besoin que d'un séparateur gaz/liquide 31, connecté à une canalisation 32 de sortie du réacteur, laquelle est éventuellement munie d'un échangeur 33 dont le rôle est similaire à celui des échangeurs 19 et 21 de la figure 1. Les gaz et les liquides obtenus en sortie du décanteur 31 sont traités de façon analogue à ceux obtenus en sortie du séparateur 20 du mode de réalisation de la figure 1.

Le mode opératoire du réacteur semi-continu est le suivant :
- on commence par injecter la boue 11 avant de chauffer le réacteur 10, et d'injecter l'oxygène 16;
- on réalise l'opération d'oxydation, par exemple pendant une durée d'environ 1 heure ;
- on stoppe la recirculation dans la boucle 17, ainsi que l'injection d'oxygène 16;
- on laisse se faire la décantation des matières solides dans le fond 30 du réacteur 10 ;
- on purge la phase aqueuse traitée par la canalisation 32, et on prélève également une fraction des matières solides décantées, par exemple à travers la purge 35 (qui peut être située exactement au fond du réacteur 10, ou en tout autre endroit permettant d'optimiser la qualité de minéralisation du résidu solide) ;
- on remet en température le réacteur 10, et on réinjecte un nouveau lot d'effluents à soumettre à une nouvelle itération du processus d'Oxydation en Milieu Humide.

Le procédé de l'invention peut être encore optimisé en réutilisant les NOx pouvant être produits par l'oxydation 15 de NH₃ au sein de la chaine de traitement, comme décrit dans la demande de brevet conjointe au nom du même déposant.

Il est connu que le traitement des boues urbaines par Oxydation en Milieu Humide produit une phase aqueuse contenant principalement de la DCO sous forme soluble, mais aussi de l'ammoniac. Lorsque les spécifications de la station d'épuration ne permettront pas de traiter la phase aqueuse produite par l'oxydation en milieu humide des boues, compte tenu des concentrations d'ammoniaque présent, il sera avantageux de prévoir des moyens d'élimination et/ou de valorisation de l'ammoniac produit. C'est l'objet notamment des moyens de stripage 25 et d'oxydation catalytique 15 des installations des figures 1 et 2, qui permettent la transformation de l'ammoniac en oxydes d'azote NOx (NO, NO_{2,} N₂O_{5,...}) ou en N₂.

On peut trouver plusieurs utilisations permettant de valoriser des oxydes d'azote sur site, notamment en les réinjectant dans le réacteur 10 pour accélérer les processus d'oxydation et limiter la production de NH₄ durant l'oxydation des boues, ou en les utilisant dans un but de désinfection des eaux, ou encore pour acidifier (28) la phase solide lors du recyclage 26, ou pour stabiliser les boues résiduelles issues du procédé, voire de boues non traitées dans le cadre de la présente invention.

## Revendications

1. Procédé intégré d'épuration d'effluents industriels et/ou urbains contenant une proportion importante de matière organique soluble et/ou en suspension, selon lequel on traite lesdits effluents dans un réacteur d'oxydation en milieu humide au sein duquel on fait subir auxdits effluents une oxydation en présence d'au moins un gaz oxydant de façon à minéraliser une partie importante de la matière organique contenue dans lesdits effluents, en produisant d'une part une phase gazeuse, et d'autre part une phase essentiellement liquide contenant principalement de la matière organique résiduelle soluble ainsi qu'une phase solide essentiellement minérale en suspension,
procédé caractérisé en ce qu'on effectue une étape de séparation liquide/solide de ladite phase essentiellement liquide résultant dudit procédé d'oxydation en milieu humide pour isoler ladite phase solide, et en ce qu'on recycle au sein dudit réacteur d'oxydation en milieu humide, au moins une fraction de ladite phase solide séparée.

2. Procédé selon la revendication 1 caractérisé en ce que ladite étape de séparation liquide/solide de ladite phase essentiellement liquide résultant dudit procédé d'oxydation en milieu humide est effectuée dans un séparateur (20) situé en dehors du réacteur d'oxydation en milieu humide.

3. Procédé selon la revendication 1 caractérisé en ce que le réacteur d'oxydation en milieu humide fonctionne en semi-continu, et en ce que ladite étape de séparation liquide/solide de ladite phase essentiellement liquide résultant dudit procédé d'oxydation en milieu humide est effectuée au sein dudit réacteur (10) lors de périodes d'interruption de la réaction d'oxydation en milieu humide, au moins une partie de la phase liquide séparée étant alors évacuée du réacteur (10), et au moins une fraction de la phase solide séparée étant conservée dans le réacteur (10).

4. Procédé selon l'une quelconque des revendications 1 à 3 caractérisé en ce qu'on réalise une recirculation (17) de l'effluent dans le réacteur (10) au cours de ladite réaction d'oxydation en milieu humide.

5. Procédé selon la revendication 4 caractérisé en ce que ladite étape de séparation liquide/solide de ladite phase essentiellement liquide résultant dudit procédé d'oxydation en milieu humide est effectuée au sein dudit réacteur lors de périodes d'interruption de ladite recirculation (17) de l'effluent dans le réacteur (10), au moins une partie de la phase liquide séparée étant alors évacuée du réacteur (10), et au moins une fraction de la phase solide séparée étant conservée dans le réacteur (10).

6. Procédé selon l'une quelconque des revendications 1 à 5, caractérisé en ce que ladite oxydation en milieu humide est effectuée en présence de catalyseur, ledit catalyseur étant tel qu'après ladite séparation liquide/solide de ladite phase essentiellement liquide résultant dudit procédé d'oxydation en milieu humide, ladite phase solide recyclée contient au moins 60% dudit catalyseur.

7. Procédé selon la revendication 6 caractérisé en ce que ledit catalyseur est un métal appartenant au groupe comprenant le manganèse, le fer, le cobalt, le nickel, le cuivre, le zinc, et les mélanges et composés d'un ou plusieurs d'entre eux.

8. Procédé selon la revendication 7 caractérisé en ce que ledit catalyseur appartient au groupe comprenant les composés solubles du cuivre et du zinc et leur mélange.

9. Procédé selon l'une quelconque des revendications 6 à 8 caractérisé en ce que le rapport massique métal catalyseur / demande chimique en oxygène (DCO) de l'effluent avant traitement est compris entre 5. 10⁻⁴ et 3. 10⁻¹ environ.

10. Procédé selon l'une quelconque des revendications 1 à 9 caractérisé en ce qu'on ajoute un additif chimique acidifiant à ladite fraction de phase solide séparée et recyclée au sein dudit réacteur d'oxydation en milieu humide.

11. Procédé selon la revendication 10 caractérisé en ce que ledit additif chimique est ajouté de façon à ajuster le pH de ladite fraction de phase solide recyclée à des valeurs comprises entre environ 1 et environ 5.

12. Procédé selon l'une quelconque des revendications 10 et 11 caractérisé en ce que ledit additif chimique appartient au groupe comprenant l'acide sulfurique et les acides organiques.

13. Procédé selon l'une quelconque des revendications 1 à 12 caractérisé en ce que la valeur de la fraction de phase solide recyclée est calculée de façon à obtenir un taux de recyclage du solide compris entre 1 et 20.

14. Procédé selon l'une quelconque des revendications 1 à 13 caractérisé en ce qu'on traite par voie biologique la phase aqueuse issue de ladite étape de séparation liquide/solide en sortie dudit réacteur.

15. Procédé selon la revendication 14 caractérisé en ce que les paramètres de fonctionnement de ladite oxydation en milieu humide sont ajustés par l'homme de métier pour réguler le rapport N/DCO de ladite phase aqueuse issue de ladite étape de séparation liquide/solide.

16. Procédé selon l'une quelconque des revendications 1 à 15 caractérisé en ce que ladite oxydation en milieu humide est effectuée à une température comprise entre environ 100°C et environ 350°C, sous une pression totale comprise entre environ 5 bars et environ 160 bars.

17. Procédé selon la revendication 16 caractérisé en ce que la quantité d'oxygène introduite dans ledit réacteur d'oxydation en milieu humide correspond à un rapport oxygène / demande chimique en oxygène (DCO) de l'effluent non traité compris entre 0,5 et 2,0 environ.

18. Procédé selon l'une quelconque des revendications 1 à 17 caractérisé en ce qu'il comporte:
- d'une part une étape de stripage de ladite phase essentiellement liquide issue de l'unité d'oxydation en milieu humide et contenant principalement de la matière organique résiduelle soluble et de l'ammoniaque, au moyen d'une veine gazeuse, afin de produire une seconde phase aqueuse significativement appauvrie en ammoniaque et une seconde phase de gaz contenant parmi ses constituants de l'oxygène et de l'ammoniac ; et
- d'autre part une étape d'oxydation de ladite seconde phase de gaz ainsi obtenue, de façon à obtenir une troisième phase de gaz résultant de l'oxydation essentiellement complète de l'ammoniaque en oxydes d'azote NO et NO₂, (ainsi que du monoxyde de carbone et des composés organiques volatiles en dioxyde de carbone),
et en ce qu'on utilise ladite troisième phase de gaz contenant essentiellement les oxydes d'azote NO et NO₂ ainsi obtenue, dans un processus appartenant à ladite chaîne de traitement desdits effluents à traiter.

19. Procédé selon la revendication 18 caractérisé en ce que ladite troisième phase de gaz contenant essentiellement les oxydes d'azote NO et NO₂ subit une étape préalable de transformation au moins partielle en nitrites avant utilisation dans un processus appartenant à ladite chaîne de traitement desdits effluents à traiter.

20. Procédé selon l'une quelconque des revendications 18 et 19, caractérisé en ce que ledit processus d'utilisation de ladite troisième phase de gaz contenant essentiellement les oxydes d'azote NO et NO₂ appartient au groupe comprenant leur utilisation pour :
- réinjection dans le processus d'oxydation en milieu humide pour accélérer les processus d'oxydation et limiter la production de NH4 durant l'oxydation des boues,
- désinfection d'une phase aqueuse à une étape quelconque de la chaîne de traitement de l'invention, ou encore d'eaux non traitées dans ladite chaîne de traitement ;
- acidification de la phase solide issue du processus d'oxydation en milieu humide,
- stabilisation des boues résiduelles issues du procédé (boues primaires issues de la station principale d'épuration ou boues secondaires issues de l'étape d'oxydation en milieu humide), voire de boues non issues de la présente chaîne de traitement.

21. Procédé selon l'une quelconque des revendications 1 à 20 caractérisé en ce que les effluents traités sont des boues résiduaires de stations d'épuration d'eaux urbaines ou industrielles.

22. Installation pour la mise en oeuvre du prodédé selon la revendication 21 caractérisée en ce qu'elle comprend un réacteur continu (10) dans lequel est réalisée la réaction d'oxydation en milieu humide, et un séparateur (20) distinct dudit réacteur (10), et en ce que ledit séparateur reçoit par une canalisation d'entrée (12) ladite phase essentiellement liquide produite par le réacteur (10), et restitue audit réacteur (10) au moins une fraction de matière solide décantée, à travers une canalisation de retour (26).

23. Installation selon la revendication 22 caractérisée en ce qu'elle comprend un réacteur (10) au sein duquel sont réalisées la réaction d'oxydation en milieu humide ainsi que la décantation des matières solides (30), ledit réacteur (10) comprenant des moyens (32, 35) de purge de la phase liquide et d'au moins une fraction de la phase solide.

24. Installation selon l'une quelconque des revendications 22 ou 23 caractérisée en ce que ladite unité d'oxydation en milieu humide est équipée d'un échangeur de chaleur (19, 21 ; 19, 33) permettant de chauffer les boues entrant dans ladite unité d'oxydation en milieu humide à l'aide de la phase liquide en sortant.

25. Station d'épuration d'eaux caractérisée en ce qu'elle comporte une unité principale de traitement d'eaux couplée à une installation de traitement des boues selon l'une quelconque des revendications 22 à 24, et mettant en oeuvre un procédé selon l'une quelconque des revendications 1 à 21, ladite installation de traitement des boues recevant en entrée les boues produites par ladite unité principale, et renvoyant en tête de ladite unité principale ladite phase liquide résultant du traitement desdites boues.

## Claims

1. Integrated process for the purification of industrial and/or urban effluents containing a high proportion of soluble and/or suspended organic matter, according to which the said effluents are treated in a wet air oxidation reactor within which the said effluents are subjected to oxidation in the presence of at least one oxidizing gas so as to mineralize a large part of the organic matter contained in the said effluents, while producing on the one hand a gaseous phase, and on the other hand an essentially liquid phase containing mainly soluble residual organic matter as well as an essentially inorganic solid phase in suspension,
the process being characterized in that a liquid/solid separation step is carried out on the said essentially liquid phase resulting from the said wet air oxidation process so as to isolate the said solid phase, and in that at least a fraction of the said separated solid phase is recycled within the said wet air oxidation reactor.

2. Process according to claim 1, characterized in that the said liquid/solid separation step on the said essentially liquid phase resulting from the said wet air oxidation process is carried out in a separator (20) located outside the wet air oxidation reactor.

3. Process according to claim 1, characterized in that the wet air oxidation reactor operates semi-continuously, and in that the said liquid/solid separation step on the said essentially liquid phase resulting from the said wet air oxidation process is carried out within the said reactor (10) during periods when the wet air oxidation reaction is interrupted, at least part of the separated liquid phase being then discharged from the reactor (10), and at least a fraction of the separated solid phase being retained in the reactor (10).

4. Process according to any of claims 1 to 3, characterized in that the effluent is recirculated (17) in the reactor (10) during the said wet air oxidation reaction.

5. Process according to claim 4, characterized in that the said liquid/solid separation step on the said essentially liquid phase resulting from the said wet air oxidation process is carried out within the said reactor during periods when the said recirculation (17) of effluent in the reactor (10) is interrupted, at least part of the separated liquid phase being then discharged from the reactor (10), and at least a fraction of the separated solid phase being retained in the reactor (10).

6. Process according to any of claims 1 to 5, characterized in that the said wet air oxidation is carried out in the presence of a catalyst, the said catalyst being such that after the said liquid/solid separation on the said essentially liquid phase resulting from the said wet air oxidation process, the said recycled solid phase contains at least 60 % of the said catalyst.

7. Process according to claim 6 characterized in that the said catalyst is a metal belonging to the group comprising manganese, iron, cobalt, nickel, copper, zinc and mixtures and compounds of one or more thereof.

8. Process according to claim 7 characterized in that the said catalyst belongs to the group comprising soluble compounds of copper and zinc and mixtures thereof.

9. Process according to any of claims 6 to 8, characterized in that the mass ratio of metal catalyst to chemical oxygen demand (COD) of the effluent before treatment is between approximately 5.10⁻⁴ and 3.10⁻¹.

10. Process according to any of claims 1 to 9, characterized in that an acidifying chemical additive is added to the said solid phase fraction separated and recycled within the said wet air oxidation reactor.

11. Process according to claim 10 characterized in that the said chemical additive is added so as to adjust the pH of the said recycled solid phase fraction to values of between approximately 1 and approximately 5.

12. Process according to either of claims 10 or 11, characterized in that the said chemical additive belongs to the group including sulphuric acid and organic acids.

13. Process according to any one of claims 1 to 12, characterized in that the value of the fraction of the recycled solid phase is calculated so as to obtain a recycling rate of the solid of between 1 and 20.

14. Process according to any one of claims 1 to 13 characterized in that the aqueous phase coming from the said liquid/solid separation step is treated by biological means on leaving the said reactor.

15. Process according to claim 14,characterized in that the operating parameters of the said wet air oxidation are adjusted by those skilled in the art to regulate the N/COD ratio of the said aqueous phase resulting from the said liquid/solid separation step.

16. Process according to any one of claims 1 to 15, characterized in that the said wet air oxidation is carried out at a temperature of between approximately 100°C and approximately 350°C under a total pressure of between approximately 5 bar and approximately 160 bar.

17. Process according to claim 16, characterized in that the quantity of oxygen introduced into the said wet air oxidation reactor corresponds to a ratio of oxygen to chemical oxygen demand (COD) of the non-treated effluent of between approximately 0.5 and 2.0.

18. Process according to any of claims 1 to 17, characterized in that it includes :
- on the one hand, a step for stripping the said essentially liquid phase coming from the wet air oxidation unit and containing mainly soluble residual organic matter and ammonia, by means of a gas stream, so as to produce a second aqueous phase significantly depleted in ammonia and a second gas phase containing oxygen and ammonia among its constituents; and,
- on the other hand, a step for oxidizing the said second gas phase thus obtained, so as to obtain a third gas phase resulting from the essentially complete oxidation of ammonia into the nitrogen oxides NO and NO₂ (as well as carbon monoxide and volatile organic compounds into carbon dioxide),
and in that the said third gas phase containing essentially the nitrogen oxides NO and NO₂ thus obtained is used in a process belonging to the said treatment line for the said effluents to be treated.

19. Process according to claim 18, characterized in that the said third gas phase essentially containing the nitrogen oxides NO and NO₂ undergoes a preliminary step of at least partial conversion into nitrites before use in a process belonging to the said treatment line for the said effluents to be treated.

20. Process according to either of claims 18 or 19, characterized in that the said process for the use of the said third gas phase essentially containing the nitrogen oxides NO and NO₂ belongs to a group including their use for :
- reinjection into the wet air oxidation process to accelerate the oxidation process and to limit the production of NH₄ during oxidation of sludge,
- disinfection of an aqueous phase at any step of the treatment line of the invention or moreover of water untreated in the said treatment line;
- acidification of the solid phase coming from the wet air oxidation process;
- stabilization of the residual sludge coming from the process (primary sludge coming from the main purification facility or secondary sludge coming from the wet air oxidation step) or even sludge not coming from the present treatment line.

21. Process according to any of claims 1 to 20, characterized in that the effluents treated are residual sludges from urban or industrial water treatment facilities.

22. Installation for carrying out the process according to claim 21, characterized in that it comprises a continuous reactor (10) in which the wet air oxidation reaction is carried out, and a separator (20) distinct from the said reactor (10), and in that the said separator receives, through an inlet pipe (12), the said essentially liquid phase produced by the reactor (10) and restores at least a fraction of the decanted solid matter to the said reactor (10) through a return pipe (26).

23. Installation according to claim 22, characterized in that in includes a reactor (10) within which the wet air oxidation reaction is carried out as well as the decanting of solid matter (30), the said reactor (10) including means (32, 35) for draining off the liquid phase and at least a fraction of the solid phase.

24. Installation according to either of claims 22 or 23, characterized in that the said wet air oxidation unit is equipped with a heat exchanger (19, 21; 19, 33) enabling the sludge entering the said wet air oxidation unit to be heated by the liquid phase on leaving.

25. Water purification facility characterized in that it comprises a main water treatment unit coupled with a sludge treatment installation according to any one of claims 22 to 24, by putting a process according to any of claims 1 to 21 into practice, the said sludge treatment installation receiving, at the inlet, sludge produced by the said main unit and returning the said liquid phase resulting from the treatment of the said sludge to the head of the said main unit.

## Patentansprüche

1. Integriertes Verfahren zum Reinigen von industriellen und/oder städtischen Abwässern mit einem hohen Anteil an organischen Stoffen, die gelöst und/oder als Suspension vorhanden sind, wonach die Abwässer in einem Oxydationsreaktor in feuchter Umgebung behandelt werden, in dem die Abwässer einer Oxydation in Gegenwart von mindestens einem oxydierenden Gas unterworfen werden, um einen großen Anteil der in den Abwässern enthaltenen organischen Stoffe zu mineralisieren, wobei einerseits eine gasförmige Phase und andererseits eine ausschließlich flüssige Phase erzeugt wird, welche hauptsächlich lösliche organische Reststoffe enthält sowie eine Suspension einer im wesentlichen mineralischen festen Phase;
das Verfahren ist dadurch gekennzeichnet, daß die im wesentlichen flüssige Phase, die sich aus dem Oxydationsverfahren in feuchter Umgebung ergibt, einer Flüssigkeit/Feststoff-Trennphase unterworfen wird, um die feste Phase zu isolieren und dadurch, daß mindestens ein Bruchteil der abgetrennten festen Phase innerhalb des Oxydationsreaktors in feuchter Umgebung rezykliert wird.

2. Verfahren gemäß Anspruch 1,
dadurch gekennzeichnet, daß die Flüssigkeit/Feststoff-Trennphase der im wesentlichen flüssigen Phase, die sich aus dem Oxydationsverfahren in feuchter Umgebung ergibt, in einem Separator (20) erfolgt, der sich außerhalb des Oxydationsreaktors in feuchter Umgebung befindet.

3. Verfahren gemäß Anspruch 1,
dadurch gekennzeichnet, daß der Oxydationsreaktor in feuchter Umgebung im halbkontinuierlichen Betrieb läuft und dadurch, daß die Flüssigkeit/Feststoff-Trennphase der im wesentlichen flüssigen Phase, die sich aus dem Oxydationsverfahren in feuchter Umgebung ergibt, innerhalb des Reaktors (10) während der Unterbrechungszeiten der Oxydationsreaktion in feuchter Umgebung erfolgt, wobei mindestens ein Teil der abgetrennten flüssigen Phase dann aus dem Reaktor (10) herausgeleitet wird und mindestens ein Bruchteil der abgetrennten festen Phase im Reaktor (10) verbleibt.

4. Verfahren gemäß einem der Ansprüche 1 bis 3,
dadurch gekennzeichnet, daß eine Rezirkulierung (17) des Abwassers in den Reaktor (10) während der Oxydationsreaktion in feuchter Umgebung erfolgt.

5. Verfahren gemäß Anspruch 4,
dadurch gekennzeichnet, daß der Flüssigkeit/Feststoff-Trennschritt dieser im wesentlichen flüssigen Phase, die sich aus dem Oxydationsverfahren in feuchter Umgebung ergibt, innerhalb des Reaktors während der Unterbrechungen der Rezirkulierung (17) der Abwässer im Reaktor (10) stattfindet, wobei mindestens ein Teil der abgetrennten flüssigen Phase aus dem Reaktor (10) herausgeleitet wird und mindestens ein Bruchteil der abgetrennten festen Phase im Reaktor (10) verbleibt.

6. Verfahren gemäß einem der Ansprüche 1 bis 5,
dadurch gekennzeichnet, daß die Oxydation in feuchter Umgebung in Gegenwart eines Katalysators stattfindet, wobei dieser Katalysator derart ist, daß nach der Flüssigkeit/FeststoffTrennung der im wesentlichen flüssigen Phase, die sich aus dem Oxydationsverfahren in feuchter Umgebung ergibt, diese rezyklierte feste Phase mindestens 60 % des Katalysators enthält.

7. Verfahren gemäß Anspruch 6,
dadurch gekennzeichnet, daß der Katalysator ein Metall aus der Gruppe ist, die Mangan, Eisen, Kobalt, Nickel, Kupfer, Zink sowie Mischungen und Verbindungen von einem oder mehreren dieser Metalle umfaßt.

8. Verfahren gemäß Anspruch 7,
dadurch gekennzeichnet, daß der Katalysator der Gruppe angehört, welche lösliche Kupfer- oder Zinkverbindungen oder deren Mischungen enthält.

9. Verfahren gemäß einem der Ansprüche 6 bis 8,
dadurch gekennzeichnet, daß das Masseverhältnis Katalysatormetall/chemischen Sauerstoffbedarf (DCO) des Abwassers vor Behandlung etwa zwischen 5·10⁻⁴ und 3·10⁻¹ liegt.

10. Verfahren gemäß einem der Ansprüche 1 bis 9,
dadurch gekennzeichnet, daß ein chemischer Säuerungzusatz dem im Oxydationsreaktor in feuchter Umgebung abgetrennten und rezyklierten festen Phasenanteil zugegeben wird.

11. Verfahren gemäß Anspruch 10,
dadurch gekennzeichnet, daß der chemische Zusatz so zugegeben wird, daß der pH Wert des rezyklierten festen Phasenanteils in etwa zwischen 1 und 5 liegt.

12. Verfahren gemäß einem der Ansprüche 10 und 11,
dadurch gekennzeichnet, daß der chemische Zusatz der Gruppe angehört, die Schwefelsäure und die organischen Säuren umfaßt.

13. Verfahren gemäß einem der Ansprüche 1 bis 12,
dadurch gekennzeichnet, daß der Wert des rezyklierten festen Phasenanteils so berechnet wird, daß man ein Rezyklierungsverhältnis des Feststoffes zwischen 1 und 20 erhält.

14. Verfahren gemäß einem der Ansprüche 1 bis 13,
dadurch gekennzeichnet, daß die wäßrige Phase, die sich aus dem Flüssigkeit/Feststoff-Trennungsschritt am Ausgang des Reaktors ergibt, einer biologischen Behandlung unterworfen wird.

15. Verfahren gemäß Anspruch 14,
dadurch gekennzeichnet, daß die Funktionsparameter der Oxydation in feuchter Umgebung vom Fachmann eingestellt werden, um das N/DCO-Verhältnis der wäßrigen Phase zu regeln, die sich aus dem Flüssigkeit/Feststoff-Trennungsschritt ergibt.

16. Verfahren gemäß einem der Ansprüche 1 bis 15,
dadurch gekennzeichnet, daß die Oxydation in feuchter Umgebung bei einer Temperatur zwischen etwa 100 °C und 350 °C erfolgt, unter einem Gesamtdruck zwischen etwa 5 bar und 160 bar.

17. Verfahren gemäß Anspruch 16,
dadurch gekennzeichnet, daß die Sauerstoffmenge, die in dem Oxydationsreaktor in feuchter Umgebung eingeführt wird, einem Verhältnis Sauerstoff/chemischen Sauerstoffbedarf (DCO) des unbehandelten Abwassers entspricht, das zwischen etwa 0,5 und 2,0 liegt.

18. Verfahren gemäß einem der Ansprüche 1 bis 17,
dadurch gekennzeichnet, daß es folgendes umfaßt:
- einerseits einen Schritt zum Abstreifen der im wesentlichen flüssigen Phase, die aus der Oxydationseinheit in feuchter Umgebung stammt und hauptsächlich lösliche organische Reststoffe und Ammoniak enthält, mit Hilfe eines Gasstrahls, um eine zweite wäßrige Phase zu erzeugen, die bedeutend an Ammoniak verarmt ist, sowie eine zweite gasförmige Phase, die unter ihren Komponenten Sauerstoff und Ammoniak enthält,
- andererseits einen Oxydationsschritt der so gewonnenen zweiten gasförmigen Phase, um eine dritte gasförmige Phase zu erhalten, die sich aus der im wesentlichen vollständigen Oxydation des Ammoniaks zu Stickoxyden NO und NO₂ (sowie des Kohlenmonoxydes und der flüchtigen organischen Verbindungen zu Kohlendioxyd) ergeben,
sowie dadurch, daß die dritte gasförmige Gasphase, die im wesentlichen die so gewonnenen Stickoxyde NO nd NO₂ enthält, in einem der Verfahren aus der Kette der Abwasserbehandlungsschritte eingesetzt wird.

19. Verfahren gemäß Anspruch 18,
dadurch gekennzeichnet, daß die dritte gasförmige Phase, die im wesentlichen die Stickoxyde NO und NO₂ enthält, einen vorhergehenden Schritt zur zumindest teilweisen Transformation zu Nitriten durchläuft, ehe sie in einem der Verfahren aus der Kette der Abwasserbehandlungsschritte eingesetzt wird.

20. Verfahren gemäß einem der Ansprüche 18 und 19,
dadurch gekennzeichnet, daß das Anwendungsverfahren der dritten gasförmigen Phase, die im wesentlichen die Stickoxyde NO und NO₂ enthält, der Gruppe angehört, die deren Anwendung zu folgenden Zwecken umfaßt:
- Wiedereinspritzung in das Oxydationsverfahren in feuchter Umgebung, um das Oxydationsverfahren zu beschleunigen und die Produktion von NH₄ während der Oxydation der Schlämme zu begrenzen,
- Desinfizieren einer wäßrigen Phase bei einem beliebigen Schritt der Verfahrenskette der Erfindung, bzw. von unbehandelten Abwässern in der Behandlungskette,
- Säuern der festen Phase, die aus dem Oxydationsverfahren in feuchter Umgebung stammt,
- Stabilisierung der Restschlämme, die sich aus dem Verfahren ergeben (Primärschlämme, die aus der Hauptkläranlage stammen oder Sekundärschlämme, die aus dem Oxydationsschritt in feuchter Umgebung stammen), gegebenenfalls von Schlämmen, die nicht aus der vorliegenden Verfahrenskette stammen.

21. Verfahren gemäß einem der Ansprüche 1 bis 20,
dadurch gekennzeichnet, daß es sich bei den behandelten Abwässern um Restschlämme aus Kläranlagen industrieller oder städtischer Abwässer handelt.

22. Anlage zur Durchführung des Verfahrens gemäß Anspruch 21,
dadurch gekennzeichnet, daß sie einen kontinuierlich arbeitenden Reaktor (10), in dem die Oxydationsreaktion in feuchter Umgebung stattfindet sowie einen vom Reaktor (10) getrennten Separator (20) umfaßt, und dadurch, daß dieser Separator die vom Reaktor (10) produzierte, im wesentlichen flüssige Phase, über eine Eingangsleitung (12) empfängt und mindestens einen Bruchteil dekantierten Feststoffes über eine Rückführungsleitung (26) an den Reaktor (10) zurückgibt.

23. Anlage gemäß Anspruch 22,
dadurch gekennzeichnet, daß sie einen Reaktor (10) umfaßt, in welchem die Oxydationsreaktion in feuchter Umgebung sowie das Dekantieren der Feststoffe (30) stattfindet, wobei der Reaktor (10) über Mittel (32, 35) zum Entleeren der flüssigen Phase und von mindestens einem Bruchteil der festen Phase verfügt.

24. Anlage gemäß einem der Ansprüche 22 oder 23,
dadurch gekennzeichnet, daß die Oxydationseinheit in feuchter Umgebung über einen Wärmetauscher (19, 21; 19, 33) verfügt, mit dem die Schlämme, die in die Oxydationseinheit in feuchter Umgebung eintreten, mit Hilfe der herauslaufenden flüssigen Phase aufgewärmt werden können.

25. Abwasserkläranlage, dadurch gekennzeichnet,
daß sie über eine Hauptbehandlungseinheit für die Abwässer verfügt, die mit einer Behandlungsanlage für die Schlämme gemäß einem der Ansprüche 22 bis 24 gekoppelt ist und eines der Verfahren gemäß einem der Ansprüche 1 bis 21 anwendet, wobei die Behandlungsanlage für die Schlämme an ihrem Eingang die Schlämme aufnimmt, die aus der Haupteinheit stammen und die flüssige Phase, die sich aus der Behandlung der Schlämme ergibt, zum Eingang der Haupteinheit zurückführt.
